# EUROPEAN PATENT APPLICATION

(11) **EP 1 746 760 A1**
(43) Date of publication of application: **24.01.2007**
(21) Application number: 04733117.8
(22) Date of filing: 14.05.2004
(51) Int. Cl.: H04L 9/14, H04L 12/44

(54) **PON SYSTEM HAVING ENCRYPTION FUNCTION AND ENCRYPTION METHOD OF THE PON SYSTEM**

(71) Applicant: MITSUBISHI ELECTRIC COPRPORATION, Chiyoda-ku Tokyo 100-8310 (JP)
(72) Inventor: KOZAKI, Seiji, Mitsubishi Electric Corporation, Chiyoda-ku, Tokyo 100-8310 (JP); MURAKAMI, Ken, Mitsubishi Electric Corporation, Chiyoda-ku, Tokyo 100-8310 (JP); TANAKA, Hiroyuki, Mitsubishi Electric Corporation, Chiyoda-ku, Tokyo 100-8310 (JP); HOTTA, Yoshifumi, Mitsubishi Electric Corporation, Chiyoda-ku, Tokyo 100-8310 (JP); YAMANAKA, Hideaki, Mitsubishi Electric Corporation, Chiyoda-ku, Tokyo 100-8310 (JP)
(74) Representative: Pfenning, Meinig & Partner GbR
(86) International application number: PCT/JP2004/006897
(87) International publication number: WO 2005/112336

(57) **Abstract**

In a PON system where variable-length packets are transmitted, a time is synchronized in advance between an optical network unit (13) and an optical line terminal (15), a new encryption key generated by any one of the optical network unit and the optical line terminal is transmitted to the other so that the new encryption key is stored in each of them, and any one of the optical network unit and the optical line terminal transmits a notification of an encryption key changing time to the other, and the optical network unit and the optical line terminal change the encryption key to a new encryption key at the encryption key changing time. Accordingly, even in the PON system where the variable-length packets are transmitted, the timing for changing the encryption key can be synchronized between the optical network unit (13) and the optical line terminal (15).

## Description

### TECHNICAL FIELD

The present invention relates to a passive optical network (PON) system, and more specifically, relates to encryption in a PON system where variable-length packets are transmitted, such as a Gigabit Ethernet (registered trademark) PON (hereinafter, "GE-PON") system. Particularly, the invention relates to a PON system with an encryption function relating to periodic update of an encryption key and an encryption method in the PON system.

### BACKGROUND ART

The GE-PON method is currently in a final phase of standardization in the IEEE. However, regulations for encryption have not yet been laid down in the GE-PON method. In the PON system, data transfer is performed between an optical line terminal (OLT) and an optical network unit (ONU). Particularly, since data transfer from the OLT to the ONU (hereinafter, "downstream transfer") is performed by simultaneous transmission, encryption is essential for ensuring security.

Generally, in encryption in a network, a method of periodically changing an encryption key is used to prevent a ciphering of the key. However, if the timing of changing the encryption key does not match accurately on a transmitting end and a receiving end, transmission data is lost.

For example, in ITU-T recommendation G.983.1, there is a proposal for encryption in a broadband passive optical network (PON) system for providing video service, a so-called B-PON system, which uses a wavelength division multiplexing.

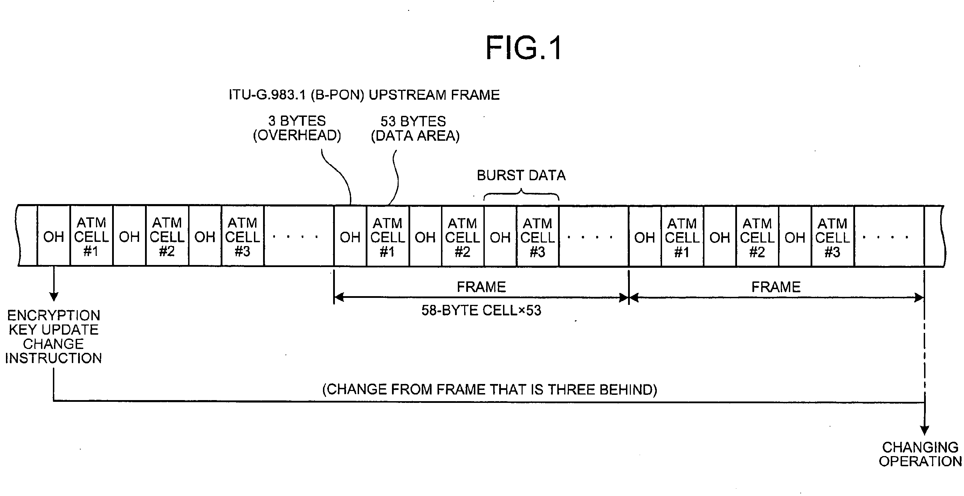

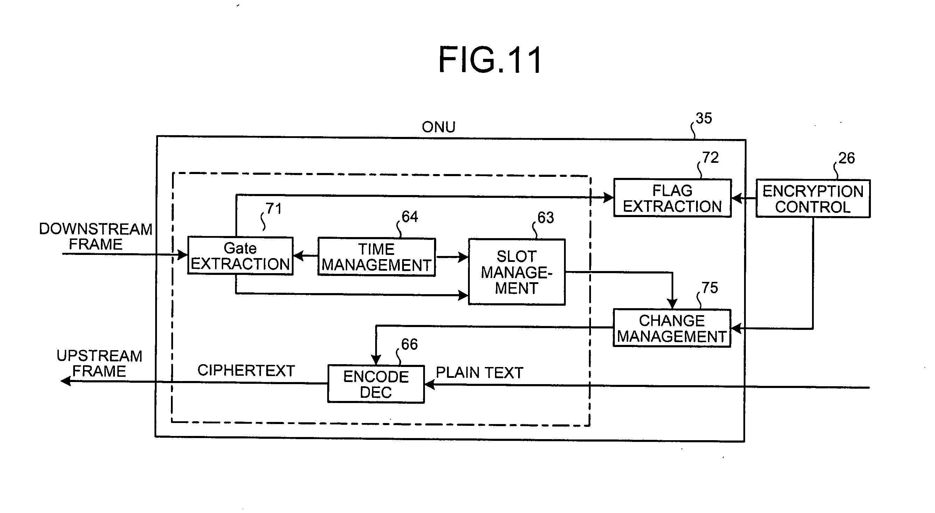

Fig. 1 depicts a format of transmission data (upstream frame) in a direction of from ONU to OLT (hereinafter, "upstream transfer") shown in Fig. 11 in the ITU-T recommendation (G.983.1 - Frame format for 155.52/155.52 Mbit/s PON). As shown in Fig. 1, in the B-PON system, the upstream frame has a configuration that makes it possible to transmit 53 fixed-length cells (burst data) of 56 bytes. One burst data includes 3-byte overhead OH and 53-byte data area (an area for inserting an ATM cell). Thus, there is a distinct separation between phases of transmission data. The upstream data transmission uses a method where transmission of one ONU is pre-permitted by the OLT for each time slot. Accordingly, it is very easy to synchronize the timing for changing the encryption key between the ONU and the OLT. For example, this can be realized by inserting a message instructing a change and update of the encryption key, such as "change the encryption key after a predetermined number of frames" (for example, see Nonpatent Literature 1).
Nonpatent Literature 1
SERIES G: TRANSMISSION SYSTEMS AND MEDIA, DIGITAL SYSTEMS AND NETWORKS
Digital transmission systems
- Digital sections and digital line system
- Optical line systems for local and access networks Broadband optical access systems based on Passive Optical Networks
ITU-T Recommendation G.983.1 (1998/10)

However, in the GE-PON, which is the subject of the present application, because the transmission data is in the form of a packet having a variable length, the timing cannot be synchronized with the same method as that of the B-PON system.

The present invention has been achieved to solve the above problems. It is an object of the invention to provide a PON system with an encryption function that can synchronize a timing for changing an encryption key between an ONU and an OLT, and an encryption method in the PON system, in a system where transmission data is a variable-length packet.

### DISCLOSURE OF INVENTION

According to a PON system with an encryption function of the present invention, the PON system, in which variable-length packets are transmitted, includes a time adjusting unit that synchronizes time information between an ONU and an OLT, an encryption-key update unit that transmits a new encryption key generated by any one of the ONU and the OLT to the other, which is stored respectively by the ONU and the OLT, and a encryption-key change-synchronizing unit by which any one of the ONU and the OLT transmits an encryption key changing time to the other, and the ONU and the OLT respectively change the encryption key to a new encryption key at the encryption key changing time. The variable-length packets are transmitted between the ONU and the OLT, while changing the encryption key periodically.

According to the present invention, in the PON system where variable-length packets are transmitted, update of the encryption key from an old encryption key to a new encryption key can be performed, and a timing for changing the encryption key can be synchronized between the ONU and the OLT.

Moreover, an encryption method in a PON system of the present invention includes a time adjustment step in which a time is synchronized in advance between the optical network unit and the optical line terminal; an encryption key update step in which a new encryption key generated by any one of the optical network unit and the optical line terminal is transmitted to the other, and the new encryption key is stored respectively by the optical network unit and the optical line terminal; and a key encryption key change-synchronizing step in which any one of the optical network unit and the optical line terminal transmits a notification of an encryption key changing time to the other, and the optical network unit and the optical line terminal respectively change the encryption key to a new encryption key at the encryption key changing time, wherein the variable-length packets are transmitted while changing the encryption key at a predetermined timing.

According to the present invention, update of the encryption key from an old encryption key to a new encryption key can be performed, and the timing for changing the encryption key can be synchronized between the ONU and the OLT in the PON system where variable-length packets are transmitted.

### BRIEF DESCRIPTION OF DRAWINGS

Fig. 1 depicts a format of upstream transmission data proposed in ITU-T recommendation G.983.1;
Fig. 2 is a system diagram of, for example, a network form of GE-PON indicated in IEEE 802.3a;
Fig. 3 depicts a protocol reference model of the GE-PON;
Fig. 4 is an explanatory block diagram of a time adjusting unit and a time adjustment process according to the present invention;
Fig. 5 is an explanatory block diagram of an example of an encryption-key update unit and an encryption key update process according to the present invention;
Fig. 6 is an explanatory block diagram and a timing chart of another example of the encryption-key update unit and the encryption key update process according to the present invention;
Fig. 7 is an explanatory block diagram and a timing chart of still another example of the encryption-key update unit and the encryption key update process according to the present invention;
Fig. 8 is an explanatory block diagram and a sequence chart of one example of an encryption key change-synchronizing unit and a key encryption key change-synchronizing process according to the present invention;
Fig. 9 is an explanatory block diagram and a sequence chart of another example of the encryption key change-synchronizing unit and the key encryption key change-synchronizing process according to the present invention;
Fig. 10 is a functional block diagram of a configuration of a PON controller on an OLT side in a sixth embodiment;
Fig. 11 is a functional block diagram of a configuration of a PON controller on an ONU side in the sixth embodiment;
Fig. 12 is one example of a GATE message to be transmitted from an OLT 15 to an ONU 13; and
Fig. 13 is an explanatory block diagram and a sequence chart of the encryption key change-synchronizing unit and an operation in the key encryption key change-synchronizing process in the present embodiment.

### BEST MODE(S) FOR CARRYING OUT THE INVENTION

Exemplary embodiments of a mobile packet communication system according to the present invention will be explained below in detail with reference to the accompanying drawings.

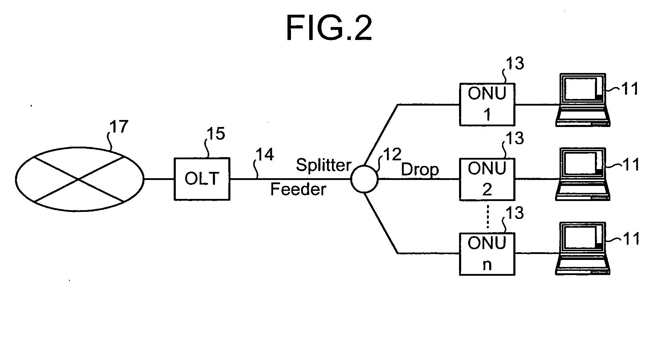

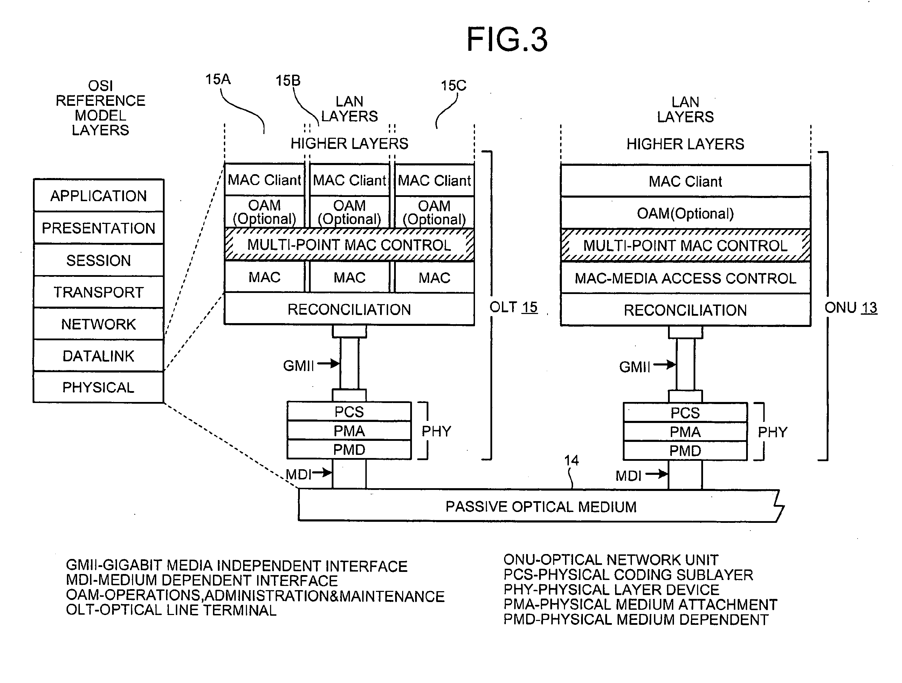

Fig. 2 is a system diagram of, for example, a network form of the GE-PON indicated in IEEE 802.3a. Fig. 3 depicts a protocol reference model of the GE-PON. The GE-PON system includes an ONU 13 that accommodates at least one optical network terminal 11 (only one optical network terminal is shown in Fig. 2), and an OLT 15 that accommodates at least one ONU 13 and connected to an IP network 17. The OLT 15 includes, as shown in Fig. 3, a plurality of PON interfaces 15A, 15B, 15C. Each of the PON interfaces 15A, 15B, 15C performs communication control with a corresponding one of the ONU 13. The OLT 15 and the ONU 13 are connected with each other by an optical fiber 14. The optical fiber 14 is physically branched by a splitter 12, and extends to the respective ONUs 13.

### First embodiment.

### 1. Time adjusting unit

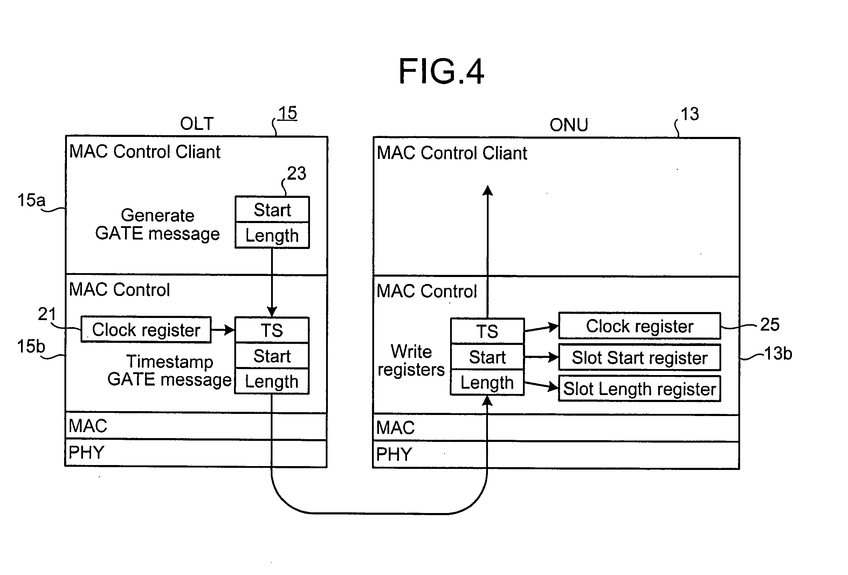

Fig. 4 is an explanatory block diagram of a time adjusting unit and a time adjustment process according to the present invention. In Fig. 4, to perform time adjustment between the OLT 15 and the ONU 13, a media access control (MAC) control client (hereinafter, "client") 15a in the OLT 15 generates a gate message 23. The gate message 23 includes start information, which is a start timing to use a slot, and length of the slot to be used. A plurality of ONUs 13 is connected to the OLT 15, and one slot is allowed to correspond to the ONUs 13 based on the information and used by time division.

The gate message 23 generated by the client 15a is transmitted to a media access control (MAC) controller (MAC control, hereinafter, "MAC controller") on a lower layer, time information (timestamp value) TS of a clock register 21 is added on the gate message 23. The time-stamped gate message 23 is transmitted from the to the ONU 13. In the ONU 13 that receives the gate message 23, a MAC controller 13b sets the timestamp value to a clock register 25.

The time at which the ONU 13 sets the timestamp value to the clock register 25 is delayed by a predetermined transmission time with respect to the time at which the OLT 15 is time-stamped. The delay time is constant at all times. Therefore, the operation of the OLT 15 is always delayed by the predetermined time from that of the ONU 13. The gate message 23 is periodically sent from the OLT 15 to the ONU 13 at a predetermined time interval. Accordingly, even if the time information of any one of the OLT 15 and the ONU 13 is wrong, the clocks of the OLT 15 and/or the ONU 13 can be corrected when the next gate message is received.

The MAC controller 15b in the OLT 15 and the MAC controller 13b in the ONU 13 constitute a time adjusting unit that synchronizes the time information between the OLT 15 and the ONU 13. A time adjustment operation performed by the OLT 15 and the ONU 13 constitutes a time adjustment process.

### Second embodiment.

### 2. Encryption-key update unit

### 2-1. Update of encryption key by authentication sequence (independent setting)

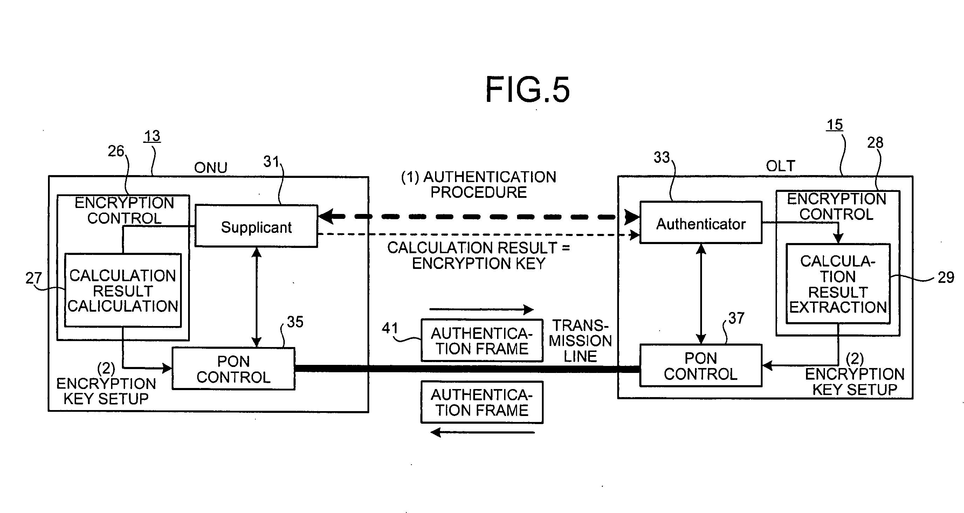

Fig. 5 is an explanatory block diagram of an example of an encryption-key update unit and an encryption key update process according to the present invention. In the second embodiment, as one method for updating the encryption key, a calculation result (for example, a hash value of a password) used in the authentication sequence for authenticating the other party is used as an encryption key.

As a general operation in the authentication sequence, an authenticator 33 in the ONU 13 makes a calculation result calculator 27 in an encryption controller 26 perform new calculation, stores the calculation result in a PON controller 35 in the ONU 13, and transmits the calculation result as an authentication frame 41 to the OLT 15 via the PON controller 35. On the other hand, in the OLT 15, a calculation result extracting unit 29 in an encryption controller 28 extracts the calculation result from the authentication frame 32 including received via a PON controller 37, in response to an instruction of the authenticator 33, and stores the result in the PON controller 37.

The calculation result transmitted from the ONU 13 to the OLT 15 is used for the operation of the authentication sequence as usual, and also used when the transmission data is encoded and decoded at the time of transferring the frame by the PON controllers 35 and 37.

The calculation result calculator 27 and a supplicant 31 in the ONU 13, and the calculation result extracting unit 29 and the authenticator 33 in the OLT 15 constitute the encryption-key update unit. The transmission and storage of the encryption key to be performed by the calculation result calculator 27, the supplicant 31, the calculation result extracting unit 29, and the authenticator 33 constitute the encryption key update process.

In the second embodiment, the ONU 13 generates the encryption key and transmits the encryption key to the OLT 15. However, it is possible to have a configuration in which the OLT 15 generates an encryption key and transmits the encryption key to the ONU 13.

In this manner, the encryption-key update unit generates a new encryption key based on the calculation result of the authentication sequence. Therefore, in a system including an authentication procedure, key information can be exchanged without adding a special frame, thereby enabling cost reduction.

### Third Embodiment.

### 2-2. Update by extension OAM

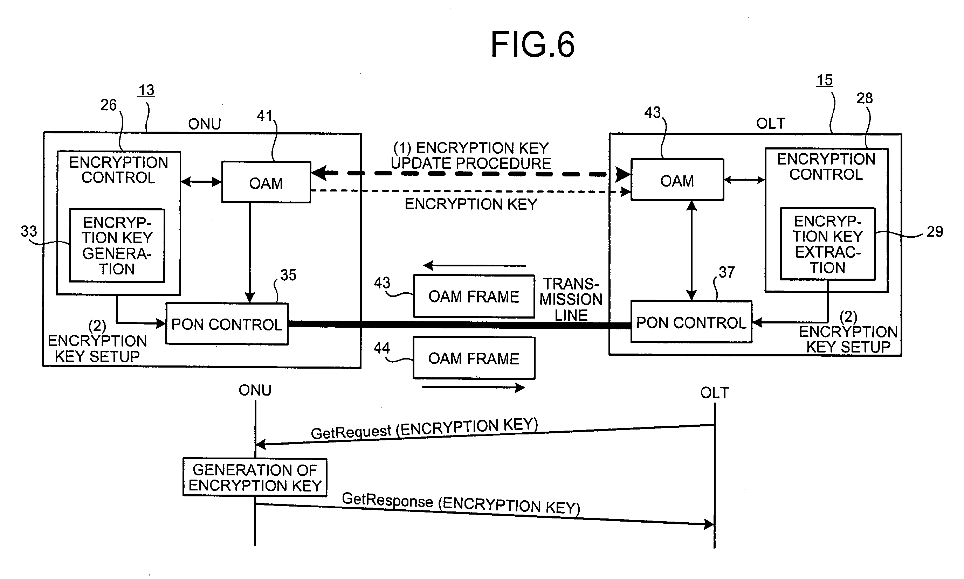

Fig. 6 is an explanatory block diagram and a timing chart of another example of the encryption-key update unit and the encryption key update process according to the present invention. There is a message known as extension OAM (Operations, Administration & Maintenance), which is a message for managing the network, specified in the IEEE 802.3ah. In the third embodiment, an encryption key update procedure is performed by using the extension OAM message.

An OAM controller 43 in the OLT 15 transmits a message requesting a new encryption key to the ONU 13 to obtain the new encryption key. Specifically, the PON controller 37 transmits an extension OAM message "GetRequest" to the ONU 13 as an OAM frame 43.

This message is received by an OAM controller 41 in the ONU 13. In response to an instruction of the OAM controller 41, an encryption key generation unit 33 in the encryption controller 26 generates a new encryption key by using, for example, a hash value. The ONU 13 uses a message of "GetResponse" to transmit the new encryption key to the OLT 15 as an OAM frame 44. The encryption key need not be the hash value, and can be generated based on a random number specially created.

The OAM controller 41 in the ONU 13 sets the new encryption key in the PON controller 35, after the transmission of "GetResponse". The OAM controller 43 sets the new encryption key in the PON controller 37, upon reception of "GetResponse". The OAM controller 43 monitors reception of "GetResponse" with respect to "GetRequest" by a timer, and in the case of timeout, transmission retry is performed three times. After retry out, the OAM controller 43 waits for the next encryption key update timing, to transmit new "GetRequest".

The encryption key generation unit 33 and the OAM controller 41 in the ONU 13, and the calculation result extracting unit 29 and the OAM controller 43 in the OLT 15 constitute the encryption-key update unit. Furthermore, transmission and storage of the encryption key to be performed by the encryption key generation unit 33 and the OAM controller 41, and the calculation result extracting unit 29 and the OAM controller 43 constitute the encryption key update process.

In the third embodiment, the ONU generates the encryption key and transmits the encryption key to the OLT 15. However, it is possible to have a configuration in which the OLT 15 generates an encryption key and transmits the encryption key to the ONU 13.

In this manner, the key information can be updated even in a system that does not include the authentication function as explained in the first embodiment. Furthermore, by performing retry transmission, a discrepancy of key information does not occur at a time of frame loss due to a transmission error or the like.

### Fourth Embodiment.

### 2-3. Update by application frame

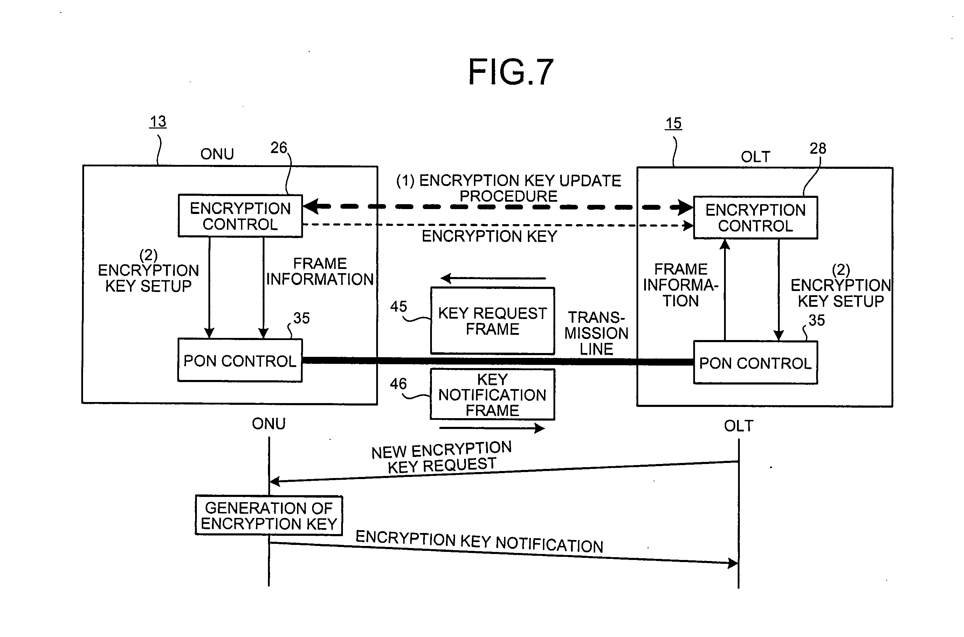

Fig. 7 is an explanatory block diagram and a timing chart of another example of the encryption-key update unit and the encryption key update process according to the present invention. In the fourth embodiment, a message is specially created by an application, and an encryption key update procedure is executed by using the created message.

To obtain an encryption key, the encryption controller 28 in the OLT 15 transmits the specially created message "new encryption key request" to the ONU 13 as a key request frame 45 via the PON controller 37. Upon reception of the message, in the ONU 13, the encryption controller 26 generates a new encryption key by using, for example, a hash value, in response thereto. The ONU 13 transmits a new encryption key message "encryption key notification" to the OLT 15 as a key notification frame 46.

The encryption controller 26 in the ONU 13 sets the new encryption key in the PON controller 35 after transmission of the "encryption key notification". The encryption controller 28 in the OLT 15 sets the new encryption key in the PON controller 37 after reception of the "encryption key notification". The encryption controller 28 in the OLT 15 monitors reception of "encryption key notification" with respect to "new encryption key request" by a timer, and in the case of timeout, transmission retry is performed three times. After retry out, the encryption controller 28 waits for the next encryption key update timing, to transmit a new "new encryption key request".

The encryption controller 26 in the ONU 13 and the encryption controller 28 in the OLT 15 constitute the encryption-key update unit. Furthermore, transmission and storage of the encryption key to be performed by the encryption controller 26 and the encryption controller 28 constitute the encryption key update process.

In the fourth embodiment, the ONU generates the encryption key and transmits the encryption key to the OLT 15. However, it is possible to have a configuration in which the OLT 15 generates an encryption key and transmits the encryption key to the ONU 13.

In this manner, the same effect as in the second embodiment can be obtained, and since a message is specially created, flexibility is increased, and mixing with a special specification can be easily made.

### Fifth Embodiment.

### 3. Encryption-key change-synchronizing unit]

### 3-1. Downstream

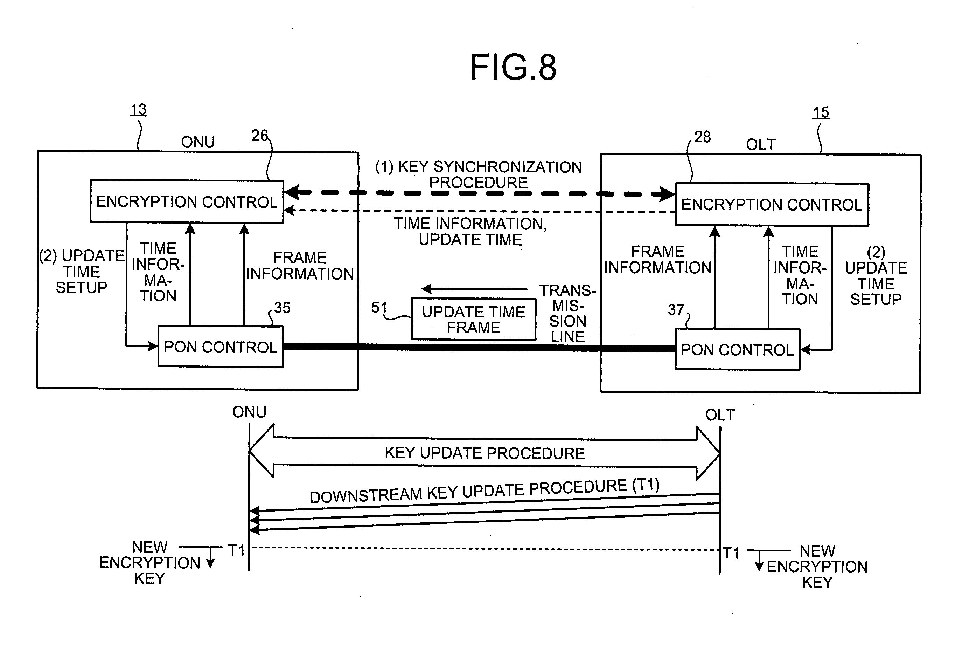

Fig. 8 is an explanatory block diagram and a sequence chart of one example of the encryption key change-synchronizing unit and a key encryption key change-synchronizing process according to the present invention. It is assumed that the time information has been already synchronized between the OLT 15 and the ONU 13 by the time adjusting unit in the first embodiment. Furthermore, it is assumed that the new encryption key has been already stored by any one of the encryption-key update units in the second to the fourth embodiments.

In the fifth embodiment, in the PON system in this state, an update time frame 51, which is a "downstream key update time message" is transmitted from the PON controller 37 in the OLT 15. In this "downstream key update time message", "downstream key update time (T1)" for changing to the new encryption key is inserted. The OLT 15 and the ONU 13 change a cipher to be used for downstream transmission to the new encryption key at the time of reaching the time. However, if the frame is being transmitted or received at the time, a transmission operation or a reception operation of the frame is continued, and when the transmission operation or the reception operation of the next frame is started, the cipher cryptogram is changed to the new encryption key.

Regarding whether to perform encryption processing, there are two modes, that is, an encryption mode in which the encryption processing is performed, and a non-encryption mode in which the encryption processing is not performed. It is assumed that even in the non-encryption mode, the "downstream key update time message" can be transmitted. In this case, any changing operation is not performed even when the specified time is reached.

Furthermore, by transmitting the value of the "downstream key update time (T1)" in the "downstream key update time message" as a special value, for example "0", this value can be used as a message instructing to change the encryption mode to the non-encryption mode.

The "downstream key update time message" can be redundantly transmitted three times for error prevention.

In the fifth embodiment, the encryption controller 26 and the PON controller 35 in the ONU 13 and the encryption controller 28 and the PON controller 37 in the OLT 15 constitute the encryption-key change-synchronizing unit. Furthermore, the changing operation to the new encryption key to be performed by the encryption controller 26, the PON controller 35, the encryption controller 28, and the PON controller 37 constitute the key encryption key change-synchronizing process.

In this manner, synchronization of the key update time becomes possible between the OLT 15 and the ONU 13, and hence a frame loss does not occur at the time of updating the key. That is, a loss of data can be prevented. Furthermore, by the redundant transmission for three times, a loss of a time message due to a transmission error, a deviation of the key update time, and a non-updatable state do not occur. By setting the time information to a special value, for example "0", this value can be used as an instruction of mode change.

### Sixth Embodiment.

### 3-2. Upstream (1) burst specifying method

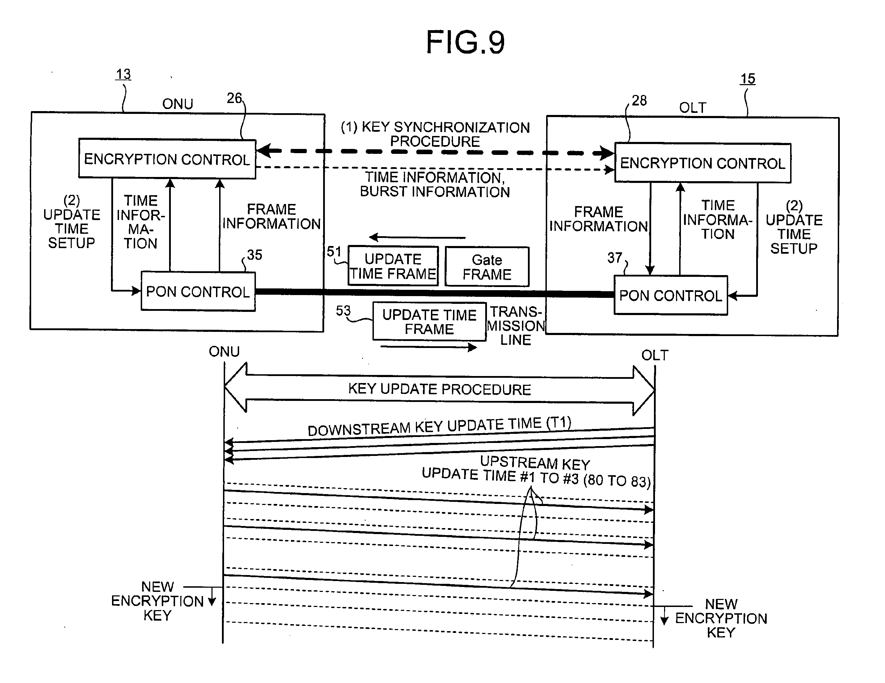

Fig. 9 is an explanatory block diagram and a sequence chart of another example of the encryption-key change-synchronizing unit and the key encryption key change-synchronizing process according to the present invention. In the sixth embodiment, the ONU 13 notifies the encryption key changing time to the OLT 15 in the upstream transmission. More specifically, by transmitting three continuous bursts as described below from the ONU 13 to the OLT 15 as an update time frame 53, the time for changing to the new encryption key is transmitted from the ONU 13 to the OLT 15 in the upstream transmission.

The encryption key to be used in the upstream direction is changed from
a burst 81 that is three bursts behind a burst by which the first message is transmitted,
a burst 82 that is two bursts behind a burst by which the second message is transmitted, and
a burst 83 that is one bursts behind a burst by which the third message is transmitted.

A notification of the encryption key changing time from the ONU 13 to the OLT 15 is transmitted in the three continuous bursts for preventing an error.

When the upstream encryption processing is in the non-encryption mode, the message is not transmitted.

In this manner, the notification of the encryption key changing time can be transmitted from the ONU 13 to the OLT 15. Accordingly, synchronization of the key update time can be achieved between the OLT 15 and the ONU 13, and hence a frame loss does not occur at the time of updating the key. That is, a loss of data can be prevented. Furthermore, by the redundant transmission for three times, a loss of a time message due to a transmission error, a deviation of the key update time, and a non-updatable state do not occur. By setting the time information to a special value, for example "0", this value can be used as an instruction of mode change.

### Seventh Embodiment.

### 3-3. Upstream (2) grant specifying method

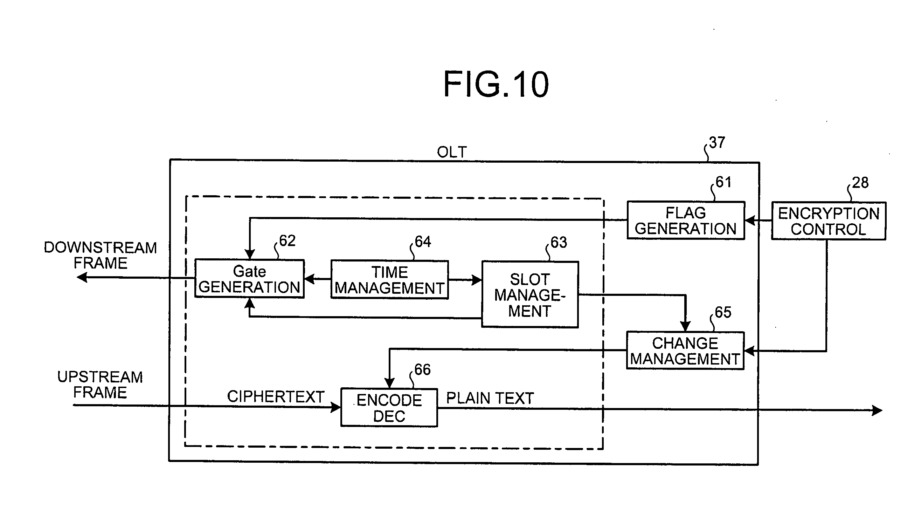

Fig. 10 is a functional block diagram of a configuration of a PON controller in an OLT in a sixth embodiment. Fig. 11 is a functional block diagram of a configuration of a PON controller in an ONU in the sixth embodiment. In the seventh embodiment, the OLT 15 transmits a message including a flag indicating the timing for changing the encryption key to the ONU 13, to instruct the timing for changing the encryption key.

It is assumed that the update to the new encryption key has been already finished between the OLT 15 and the ONU 13 by any one of the encryption-key update units in the second to the fourth embodiments.

In Fig. 10, a slot manager 63 in the OLT 15 determines the timing of changing to the new encryption key. A gate generator 62 generates a Gate message from a flag generated by a flag generator 61 and the time information managed by a time manager 64, based on a cipher calculated by the encryption controller 28 in response to an instruction from the slot manager 63, and transmits the Gate message to the ONU 13. On the other hand, the slot manager 63 transmits the timing of changing to the new encryption key to a change manager 65. The change manager 65 transmits the new encryption key from the encryption controller 28 to a decoder 66 based on the timing from the slot manager 63. The decoder 66 decodes a ciphertext transmitted from the ONU 13 to a plain text based on the new encryption key.

With reference to Fig. 11, in the ONU 13, a Gate extracting unit 71 receives the Gate message, a flag extracting unit 72 extracts a flag from the Gate message, and the encryption controller 26 holds the flag. It is assumed that the new encryption key has been already stored in the encryption controller 26 by any one of the encryption-key update units in the second to the fourth embodiments. The Gate message is also transmitted to a slot manager 73. The slot manager 73 determines the timing for changing the encryption key from the time information managed by a time manager 74, and transmits the timing to a change manager 75. The change manager 75 transmits the new encryption key from the encryption controller 26 to an encryption unit 76. The encryption unit 76 converts transmission data in a plain text to a ciphertext by using the new encryption key and outputs the ciphertext.

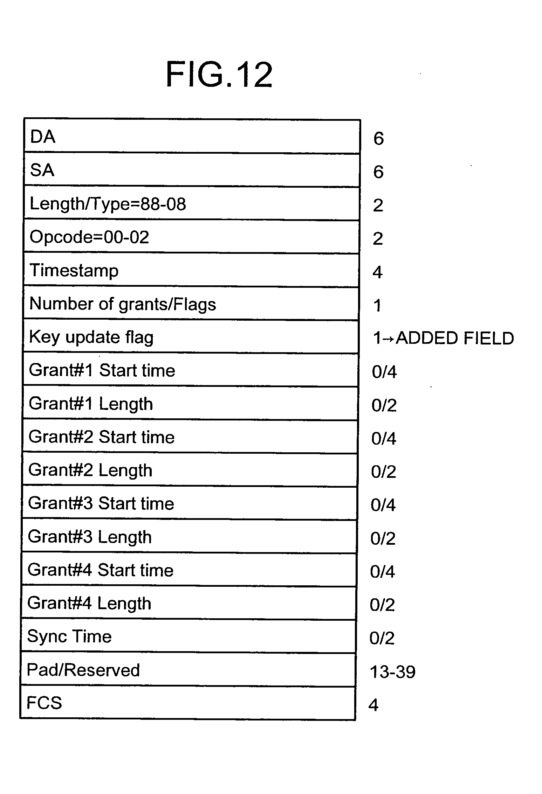

Fig. 12 is one example of contents of the GATE message. As shown in Fig. 12, in the Gate message in the seventh embodiment, a "Key update flag" field is added to the Gate message specified in the IEEE 802.3ah. This flag indicates an encryption key changing burst in the upstream direction.

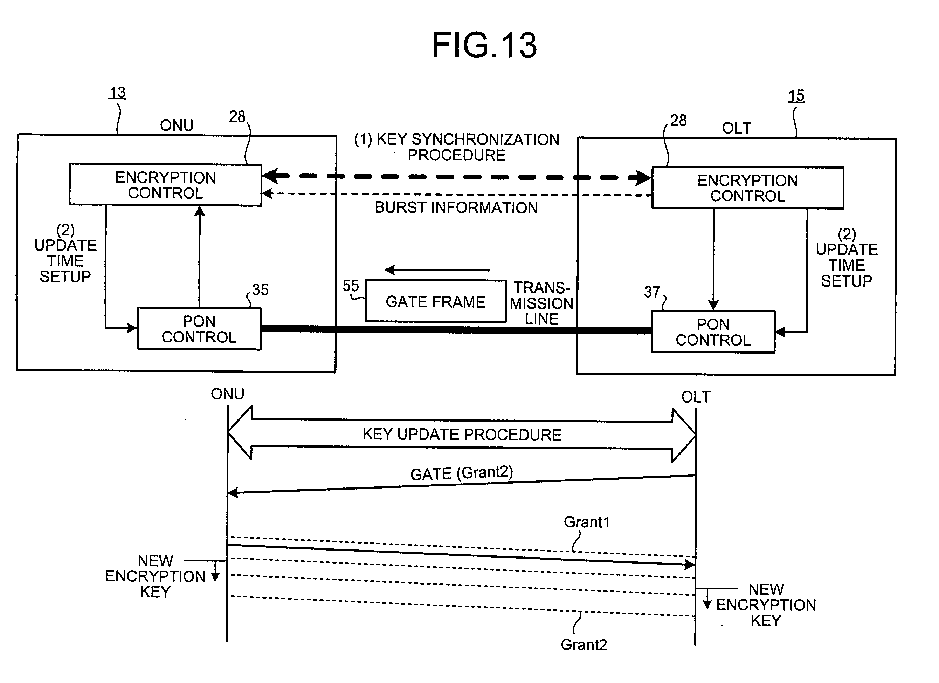

Fig. 13 is an explanatory block diagram of the encryption key change-synchronizing unit and a sequence chart of the key encryption key change-synchronizing process. The OLT 15 transmits the Gate message shown in Fig. 12 to the ONU 13 as a Gate frame 55, thereby instructing a burst for changing the encryption key in the upstream direction. The ONU 13 changes the encryption key to be used in the upstream direction at the time of the instructed burst. On the other hand, the OLT 15 determines the changing timing, taking into consideration delay time generated due to transmission delay. In the case of the non-encryption mode, the flag is not used.

In this manner, the notification of the encryption key changing time can be transmitted from the ONU 13 to the OLT 15. Accordingly, synchronization of the key update time can be achieved between the OLT 15 and the ONU 13, and hence a frame loss does not occur at the time of updating the key. That is, a loss of data can be prevented.

### INDUSTRIAL APPLICABILITY

The PON system with the encryption function and the encryption method in the PON system according to the present invention are suitable for encryption in the PON system where variable-length packets are transmitted, such as the Gigabit Ethernet (registered trademark) PON system, and particularly suitable for the PON system where the encryption key is periodically updated.

## Claims

1. A PON system with an encryption function in which an optical network unit that accommodates at least one terminal, and an optical line terminal that accommodates at least one optical network unit are included, and variable-length packets are transmitted, wherein the PON system comprises:
a time adjusting unit that synchronizes the time information between the optical network unit and the optical line terminal;
an encryption-key update unit that transmits a new encryption key generated by any one of the optical network unit and the optical line terminal to the other, which is then stored respectively by the optical network unit and the optical line terminal; and
a encryption-key change-synchronizing unit by which any one of the optical network unit and the optical line terminal transmits a notification of an encryption key changing time to the other, and the optical network unit and the optical line terminal respectively change the encryption key to a new encryption key at the encryption key changing time, wherein
the variable-length packets are transmitted between the optical network unit and the optical line terminal, while changing the encryption key at a predetermined timing.

2. The PON system with the encryption function according to claim 1, wherein the encryption-key update unit generates the new encryption key based on a calculation result of an authentication sequence.

3. The PON system with the encryption function according to claim 2, wherein the calculation result is a hash value of the password.

4. The PON system with the encryption function according to claim 1, wherein any one of the optical network unit and the optical line terminal transmits a new encryption key request to the other, and the other generates the new encryption key in response thereto.

5. The PON system with the encryption function according to claim 4, wherein the optical line terminal and the optical network unit use an OAM message for the new encryption key request and a response thereto.

6. The PON system with the encryption function according to claim 4, wherein the optical line terminal and the optical network unit use a message in an application frame for the new encryption key request and the response thereto.

7. The PON system with the encryption function according to claim 4, wherein the calculation result is a hash value of the password.

8. The PON system with the encryption function according to claim 1, wherein the optical line terminal transmits an encryption key changing time message including the encryption key changing time to the optical network unit, and changes the encryption key to a new encryption key based on the encryption key changing time, and
the optical network unit receives the encryption key changing time message, and changes the encryption key to the new encryption key based on the encryption key changing time included in the encryption key changing time message.

9. The PON system with the encryption function according to claim 1, wherein the optical network unit transmits a plurality of continuous encryption key changing time bursts including the encryption key changing time to the optical line terminal, and changes the encryption key to a new encryption key at the encryption key changing time, and
the optical line terminal receives the continuous encryption key changing time bursts, and changes the encryption key to the new encryption key based on the encryption key changing time included in the encryption key changing time message.

10. The PON system with the encryption function according to claim 1, wherein a flag indicating a burst of change is inserted into a gate message transmitted from the optical line terminal to the optical network unit, and the optical line terminal and the optical network unit change the encryption key to the new encryption key at a time of the burst indicated by the flag.

11. An encryption method in a PON system where an optical network unit that accommodates at least one terminal, and an optical line terminal that accommodates at least one optical network unit are included, and variable-length packets are transmitted, comprising:
a time adjustment step in which a time is synchronized in advance between the optical network unit and the optical line terminal;
an encryption key update step in which a new encryption key generated by any one of the optical network unit and the optical line terminal is transmitted to the other, and the new encryption key is stored respectively by the optical network unit and the optical line terminal; and
a key encryption key change-synchronizing step in which any one of the optical network unit and the optical line terminal transmits a notification of an encryption key changing time to the other, and the optical network unit and the optical line terminal respectively change the encryption key to a new encryption key at the encryption key changing time, wherein
the variable-length packets are transmitted while changing the encryption key at a predetermined timing.

12. The encryption method in the PON system according to claim 11, wherein the encryption-key update step generates the new encryption key based on a calculation result of an authentication sequence.

13. The encryption method in the PON system according to claim 12, wherein the calculation result is a hash value of the password.

14. The encryption method in the PON system according to claim 11, wherein any one of the optical network unit and the optical line terminal transmits a new encryption key request to the other, and the other generates the new encryption key in response thereto.

15. The encryption method in the PON system according to claim 14, wherein the optical line terminal and the optical network unit use an OAM message for the new encryption key request and a response thereto.

16. The encryption method in the PON system according to claim 14, wherein the optical line terminal and the optical network unit use a message in an application frame for the new encryption key request and the response thereto.

17. The encryption method in the PON system according to claim 14, wherein the encryption key is generated based on a hash value.

18. The encryption method in the PON system according to claim 11, wherein the encryption key change-synchronizing step is performed based on an encryption key changing time message transmitted from the optical line terminal to the optical network unit.

19. The encryption method in the PON system according to claim 11, wherein the encryption key change-synchronizing step is performed based on a plurality of continuous encryption key changing time bursts transmitted from the optical line terminal to the optical network unit.

20. The encryption method in the PON system according to claim 11, wherein a flag indicating a burst of change is inserted into a gate message transmitted from the optical line terminal to the optical network unit, and the optical line terminal and the optical network unit change the encryption key to the new encryption key at a time of the burst indicated by the flag.
